**Europäisches Patentamt**

**European Patent Office**

**Office européen des brevets**

(19)

(11) Numéro de publication: **0 220 983**

**B1**

(12) # FASCICULE DE BREVET EUROPEEN

(45) Date de publication du fascicule du brevet: **01.08.90**

(21) Numéro de dépôt: **86402226.4**

(22) Date de dépôt: **07.10.86**

(51) Int. Cl.⁵: **B 23 P 19/06, G 21 C 13/06**

(54) Procédé et dispositif de recherche de la position optima de vissage de goujons de grandes dimensions.

(30) Priorité: **29.10.85 FR 8516061**

(43) Date de publication de la demande:
**06.05.87 Bulletin 87/19**

(45) Mention de la délivrance du brevet:
**01.08.90 Bulletin 90/31**

(84) Etats contractants désignés:
**BE CH DE ES GB IT LI NL SE**

(56) Documents cités:
**EP-A-0 003 326**
**DE-A-2 504 127**
**DE-A-2 554 420**
**DE-A-2 815 361**

**PATENTS ABSTRACTS OF JAPAN, vol. 9, no. 51**
**(M-361)1774r, 6 mars 1985; & JP-A-59 187 430**
**(TOYOTA JIDOSHA K.K.) 24-10-1984**

(73) Titulaire: **FRAMATOME**
**Tour Fiat 1, Place de la Coupole**
**F-92400 Courbevoie (FR)**

(72) Inventeur: **Bourdonne, Jean-Claude**
**9, résidence de Morambeau**
**F-71670 Le Breuil (FR)**
Inventeur: **Briand, Alain**
**5 Route de Saint-Sornin**
**F-71200 Le Creusot (FR)**

(74) Mandataire: **Bressand, Georges et al**
**c/o CABINET LAVOIX 2 Place d'Estienne d'Orves**
**F-75441 Paris Cédex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé et un dispositif de recherche de la position optima de vissage de goujons de grandes dimensions, notamment pour la fixation du couvercle d'une cuve par exemple de réacteur nucléaire.

On sait que dans les réacteurs nucléaires, le couvercle est fixé de manière amovible sur la cuve afin de permettre le rechargement périodique en combustible du réacteur et, à la faveur de celui-ci, une inspection de l'intérieur de la cuve.

A cet effet, le couvercle est fixé sur la cuve du réacteur par des goujons qui sont vissés dans la collerette de la cuve et qui pénètre dans des trous lisses prévus dans la collerette du couvercle. Ces goujons sont généralement employés en assez grand nombre et relativement rapprochés les uns des autres, si bien que le démontage et le remontage du couvercle nécessitent le dévissage et le vissage de tous ces goujons en plus de leur mise en tension.

Ces opérations de vissage ou de dévissage des goujons sont aléatoires et délicates. En effet, le goujons pesent plusieurs centaines de kilogrammes de sorte que, lors du vissage du goujon dans le filetage ou lors de sont dévissage, on doit vaincre des résistances de frottement qui apparaissent dans le filetage et qui sont d'autant plus élevées que le goujon est plus lourd. De plus, les axes des différents éléments de l'appareil de vissage ne concordent pas toujours après fonctionnement avec les axes des trous taraudés de la cuve ou avec les axes des goujons. Par conséquent, il arrive fréquemment que la coaxialité du goujon ne puisse se faire automatiquement au moment de son introduction dans le trou taraudé de la cuve et cette opération doit donc être effectuée manuellement de même que les premiers tours de vissage du goujon. Il en résulte que le personnel, durant ce travail, risque de séjourner pendant une période excessivement longue dans une zone de rayonnements radioactifs trop élevés.

Ces défauts d'alignement, qui peuvent également provoquer des coincements du goujon pendant son vissage dans le trou taraudé de la cuve, entraînent sur les pièces en mouvement des contraintes irrégulièrement réparties autour de leur axe de translation ou de rotation qui peuvent provoquer par frottement une usure irrégulière et prématurée de ces pièces.

On connait un appareil de vissage et de dévissage des goujons qui permet une certaine latitude d'orientation axiale du goujon par l'intermédiaire d'un système à rotule et coussin d'air combiné avec un joint d'entraînement ayant deux degrés de liberté dans deux directions perpendiculaires entre elles.

Mais cet appareil est extrêmement compliqué et ne permet pas de rechercher la direction préférentielle de vissage pendant le montage des goujons, si bien que des frottements excessifs peuvent se produire sur les pièces en mouvement.

On connait dans le DE—A—2 504 127, un dispositif de vissage permettant le centrage automatique d'un corps cylindrique lors de son introduction dans un trou. Ce dispositif effectue la recherche de la position optimale d'introduction du corps cylindrique dans le trou correspondant par une trajectoire en spirale ronde ou carrée.

On connait également dans le DE—A—2 554 420, un procédé et un dispositif pour effectuer automatiquement le vissage d'un goujon dans un écrou de type classique.

Ce dispositif comporte des moyens d'orientation du goujon, un système de vissage réversible et à vitesse variable, un organe de préhension du goujon permettant d'exercer sur ledit goujon un couple d'entraînement dans les deux sens, et un automate programmable de pilotage de l'ensemble du dispositif.

La recherche de la position de vissage s'effectue selon une trajectoire déterminée et indentique pendant toute la durée du vissage. Cette trajectoire est constante et à la forme d'un carré.

Le but de l'invention est donc de proposer un procédé de recherche de la position optima du goujon pour vissage à un couple minimum évitant le grippage.

Dans ce but, après avoir fixé le goujon à un dispositif de vissage-dévissage,

—on vérifie la verticalité du goujon et son alignement axk l'axe de l'orifice taraudé,

—on commande la descente du goujon jusqu'à son accostage dans le chambrage du taraudage de l'orifice,

—on met en rotation le goujon dans le sens inverse du vissage,

—on détecte le point d'engagement des filets du goujon dans les filets de l'orifice taraudé,

—on arrête la rotation du goujon en sens inverse et on commande le début duvissage par la rotation dudit goujon en sens normal sur quelques tours, si possible, et à vitesse lente,

—si on détecte pendant ce vissage un premier coincement du goujon dans l'orifice taraudé lorsque le couple de vissage devient supérieur à un couple de déclenchement déterminé, on arrête la rotation du goujon,

—on effectue, dès la détection de ce premier coincement, la première recherche de position optima de vissage du goujon par une trajectoire appropriée, ladite trajectoire de la première recherche de position optima de vissage étant une spirale ronde ou carrée,

—on arrête cette première recherche au moment où le couple de vissage redevient inférieur au couple de déclenchement et on enregistre les coordonnées du nouveau centre optima de vissage.

—on poursuit le vissage à vitesse réduite sur quelques tours et on augmente, si possible, la vitesse de vissage,

—on détecte pendant ce vissage chaque nouveau coincement et on effectue après chaque coincement une nouvelle recherche de position optima de vissage par une trajectoire appropriée à partir du centre correspondant à l'arrêt précédent préalablement enregistré, la trajectoire des recherches successives des positions optima de vissage étant soit des spirales rondes ou carrées dans le cas contraire,

—on reprend le vissage après chaque détection du nouveau centre optima de vissage,

—et on poursuit le vissage du goujon à vitesse rapide jusqu'à la détection de la fin du vissage.

L'invention est également relative à un dispositif de recherche de la position optima de vissage de goujons.

Afin de bien faire comprendre l'invention, on va maintenant décrire, en se référant aux figures jointes en annexe, un mode particulier de réalisation du procédé et du dispositif suivant l'invention.

La figure 1 est une vue schématique en plan montrant l'installation du dispositif de vissage conforme à l'invention.

La figure 2 est une vue schématique en perspective du dispositif de vissage conforme à l'invention.

La figure 3 est une vue en coupe suivant III—III de la partie supérieure de la figure 2.

La figure 4 est une vue en coupe suivant IV—IV de la partie supérieure de la figure 2.

La figure 5 est un schéma montrant les différentes trajectoires de recherche de la position optima de vissage.

Les figures 6 et 7 sont des schémas montrant la superposition des séquences de recherche de la position optima de vissage.

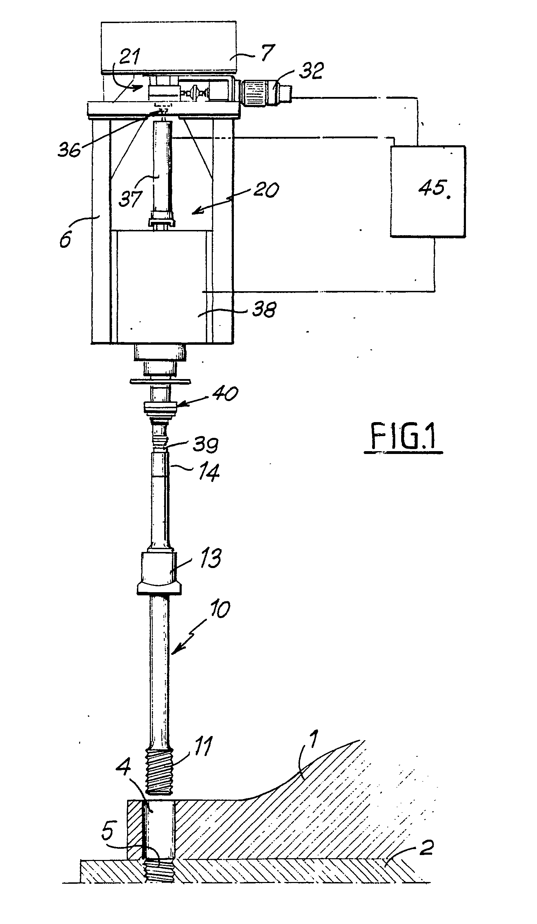

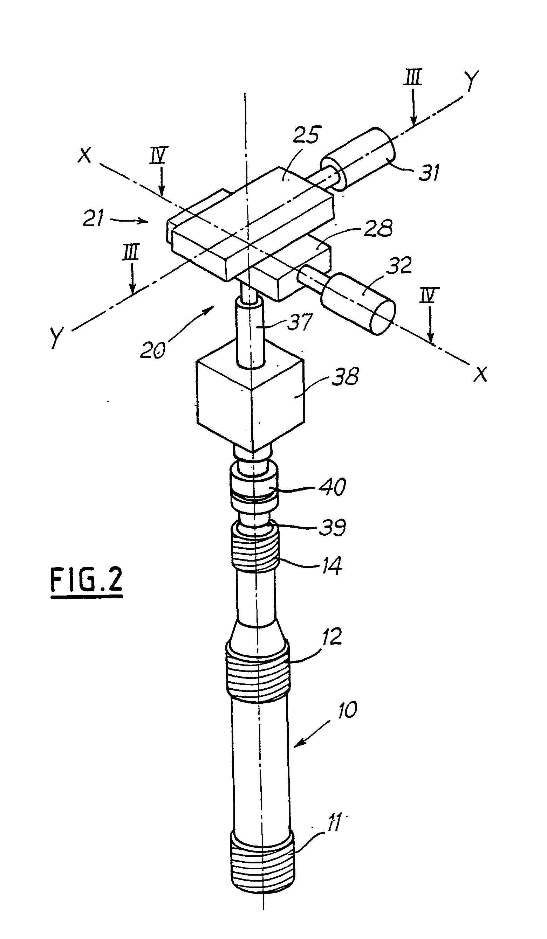

Le dispositif de vissage et dévissage conforme à l'invention, tel qu'il est représenté sur les figures 1 et 2, est utilisé pour ouvrir ou fermer un couvercle 1 d'une cuve 2 par exemple d'un réacteur nucléaire.

Comme cela est bien connu, le couvercle 1 et la cuve 2 ont une forme de révolution autour d'un axe géométrique vertical. Le couvercle 1 est fixé de manière détachable sur la cuve 2 au moyen de plusieurs goujons 10 d'axe vertical qui sont régulièrement répartis à la périphérie du couvercle 1 et de la cuve 2.

Chaque goujon 10 passe à travers un trou lisse 4 prévu verticalement dans le bord périphérique du couvercle 1 et est muni, à sa partie inférieure, d'un filetage 11 destiné à être dans un trou taraudé 5 du bord périphérique de la cuve 2 et à sa partie médiane d'un second filetage 12 sur lequel est vissé un écrou de cuve 13. D'autre part, le goujon 10 comporte à sa partie supérieure des gorges circulaires ou des filets à profils appropriés 14 permettant sa mise en tension. Il comporte également à sa partie supérieure un évidement interne pour l'introduction d'un système de préhension et de mise en rotation par le dispositif de vissage et dévissage conforme à l'invention.

Ce dispositif de vissage-dévissage, désigné dans son ensemble par la référence 20, est supporté par l'intermédiaire d'un châssis 6 à un chariot 7 se déplaçant sur des rails non représentés. Au dessous du chariot 7 est montée une table à mouvements croisés orthogonaux 21.

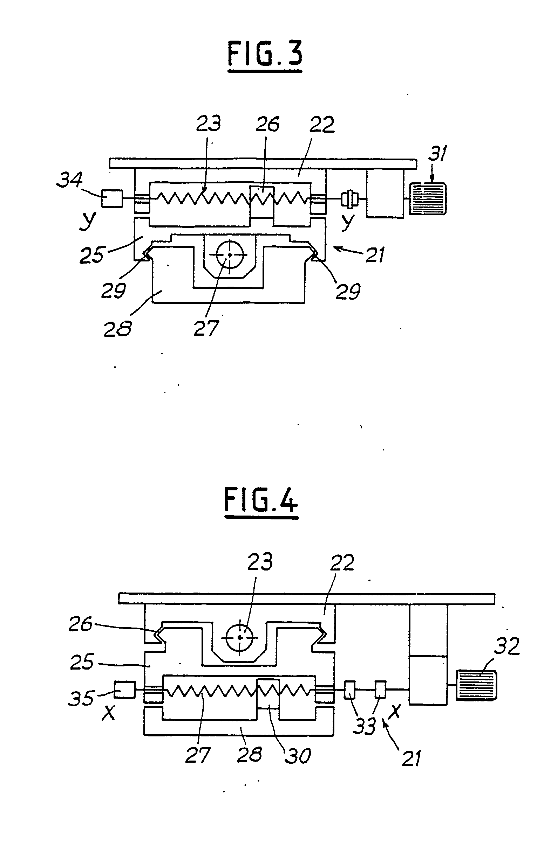

Comme représenté sur les figures 2 à 4, cette table 21 se compose d'un banc 22 fixe et suspendu, muni à sa partie inférieure d'une vis de translation 23. Le banc 22 supporte par l'intermédiaire de glissières à billes 24 (figure 4) un premier chariot 25 qui comporte à sa partie supérieure un écrou 26 (figure 3) se déplaçant sur la vis 23 et assurant la translation dudit chariot selon un axe Y.

Le premier chariot 25 est muni à sa partie inférieure d'une vis de translation 27 identique à la vis 23, mais dont l'axe est perpendiculaire à la vis 23. Ce premier chariot 25 supporte un deuxième chariot 28 par l'intermédiaire de glissières à billes 29 (figure 3) fixées sur ledit premier chariot 25. Le deuxième chariot 28 comporte à sa partie supérieure un écrou d'entraînement 30 (figure 4) actionné par la vis 27 et assurant la translation dudit chariot 28 selon un axe X orthogonal à l'axe Y.

Les vis 23 et 27 sont couplées à l'une de leurs extrémités à un motoréducteur frein respectivement 31 et 32 fixé sur le banc 22, le motoréducteur 32 de la vis 27 étant accouplé à celle-ci par un montage à cardan 33 du fait du mouvement relatif des deux chariots 25 et 28. De plus, les vis 23 et 27 reçoivent chacune à leur autre extrémité un codeur incrémental respectivement 34 et 35 permettant le pilotage de l'ensemble de la table 21.

Les systèmes vis-écrou (23, 26—27, 30) et les motoréducteurs (31, 32) peuvent être remplacés par exemple par des vérins articulés à une extrémité sur le banc 22 ou sur le premier chariot 25 et à l'autre extrémité respectivement sur le première chariot 25 et le deuxième chariot 28.

Le deuxième chariot 28 supporte, par l'intermédiaire d'une liaison 36, un compensateur de poids asservi 37 constitué par exemple par un vérin hydraulique. Ce vérin 37 a pour but d'exercer un effort de compensation axial à une valeur voulue, cette valeur comprenant le poids de l'ensemble mobile du dispositif et du goujon augmenté ou réduit de la faible valeur désirée selon que l'on veut exercer sur le goujon cette valeur dans le sens de la compression lors du vissage ou de la traction lors du dévissage. D'autre part, le vérin 37 a une course largement suffisante pour couvrir toute la course de vissage du goujon et également pour couvrir les déplacements axiaux d'approche ou d'extraction. Un capteur de mesure de position axial, non représenté, est implanté dans le vérin compensateur de poids 37.

A l'extrémité inférieure du compensateur 37 est montée un système de vissage 38 réversible et à vitesse variable, qui entraîne un organe de préhension 39 quelconque du goujon 10 permettant d'exercer sur ledit goujon un couple d'entraînement dans les deux sens et un effort axial.

Un limiteur de couple 40, assujetti à une valeur de déclenchement correspondant au couple maximum de vissage, est interposé entre le système de vissage 38 et l'organe de préhension 39. Ce limiteur de couple 40, par exemple à billes, actionne un micro-contact incorporé, non représenté, qui commande le fonctionnement de la table 21.

Le couple de vissage du goujon 10 peut également être limité par sa mesure sur l'arbre de sortie du système de vissage 38 assujettie à une consigne de seuil.

La liaison entre le système de vissage 38 et le goujon 10 par l'intermédiaire de l'organe de préhension 39 est du type semi-rigide, ce qui permet une latitude angulaire par exemple de 2° maximum.

L'ensemble du dispositif est commandé par un automate programmable, schématisé en 45 sur la figure 1, pour le pilotage de la recherche de la position optima de vissage par la table 21, du vissage proprement dit c'est-à-dire: la descente, la rotation à gauche et à droite, la fin de course basse, et enfin de la compensation de poids par le vérin hydraulique 37.

Le fonctionnement du dispositif ainsi décrit est le suivant:

Pour fixer le couvercle 1 sur la cuve 2, on positionne le dispositif de vissage-dévissage 20 supportant un goujon 10 par l'intermédiaire de l'organe de préhension 39 au-dessus des orifices 4 et 5 du couvercle 1 et de la cuve 2. On vérifie la verticalité du goujon 10, son positionnement s'effectuant à une position fixe théorique correspondant à la maille de perçage des taraudages des goujons de fixation.

On vérifie également la mise à zéro du système 21 de recherche de position suivant les axes XY.

Après ces opérations de vérification, on met en charge le vérin hydraulique 37 et on commande par l'automate programmable 45 la descente du goujon 10 actionné par ledit vérin piloté. Dès l'accostage du goujon 10 dans le chambrage du taraudage 5, sur la consigne de l'automate 45, le poids du goujon 10 est compensé de 90% à 95% par le vérin 37 de façon à ne pas faire supporter le poids dudit goujon au premier filet du taraudage.

Ensuite, on met le système de vissage 38 en rotation dans le sens inverse du vissage pour rechercher le point d'engagement des filets, qui provoque une légère chute du goujon 10. Cette chute est détectée par le capteur de déplacement vertical incorporé dans le vérin compensateur de poids 37.

Au moment de la détection de ce point, on arrête la rotation inverse du système de vissage 38 et l'automate 45 commande le début du vissage par la rotation dans le sens normal du système de vissage sur deux à trois tours si possible et à vitesse lente.

S'il se produit un coïncement du goujon 10 dans l'orifice taraudé 5, le couple de vissage devient supérieur au couple de déclenchement du limiteur 40, si bien que le système de vissage 38 continue à tourner, mais le goujon 10 n'est plus entraîné en rotation. Le limiteur 40 actionne le micro-contact incorporé qui commande à son tour, par l'intermédiaire de l'automate programmable 45, la mise en marche de la table 21 du système XY à mouvements croisés orthogonaux pour la recherche de la position optima de vissage du goujon 10.

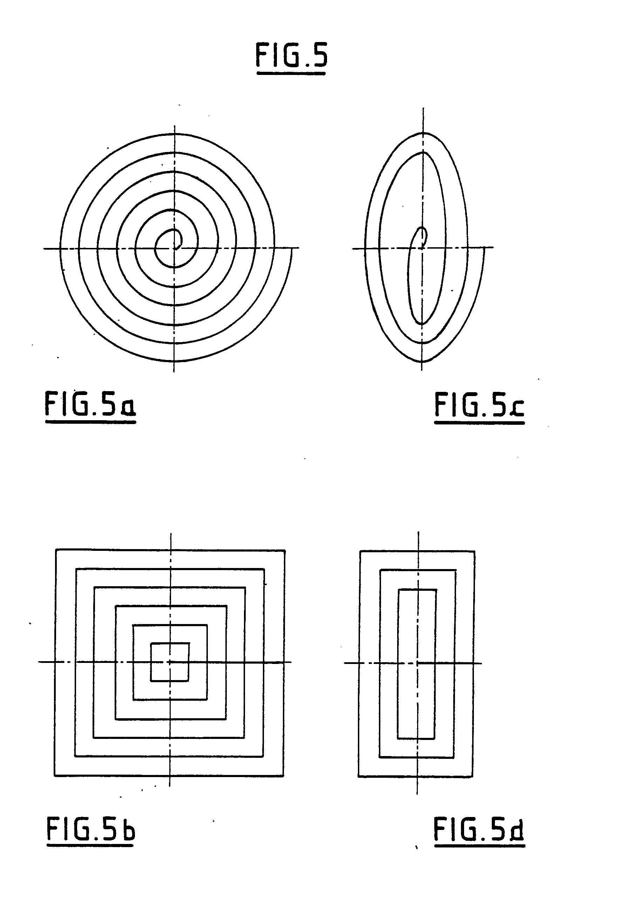

Au début du vissage, s'il y a coïncement, les écarts de position n'ayant pas de direction préférentielle, la recherche de position optima se fera suivant une trajectoire en spirales d'Archimède rondes ou carrées comme représenté respectivement sur les figures 5a et 5b.

L'option spirales rondes ou carrées est un choix de programmation, le procédé étant utilisable soit avec les spirales rondes, soit avec les spirales carrées, et avec l'une ou l'autre des motorisations des chariots 25 et 27, c'est-à-dire avec les motoréducteurs 31, 32 ou avec des vérins hydrauliques.

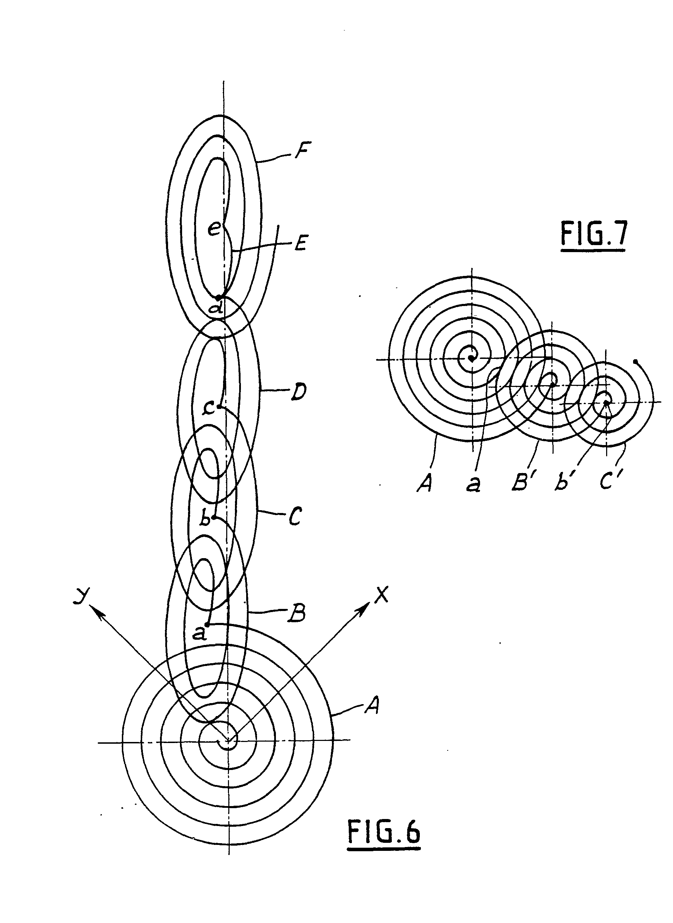

Par conséquent, dès la détection du coïncement, l'automate 45 commande les moteurs 31 et 32, selon un programme préalablement établi, ce qui a pour effet d'actionner les vis 23 et 27 et de déplacer simultanément les chariots 25 et 28, le chariot 25 se déplaçant suivant l'axe Y et le chariot 28 selon l'axe X. Sous l'action de ces chariots, le mouvement est transmis au goujon 10, de telle sorte que l'extrémité dudit goujon décrive une spirale ronde $a$ (figure 6) de façon à rechercher la position optima de vissage.

Cette position optima de vissage par exemple $a$ sur la figure 6 est détectée lorsque le couple de vissage redescend en-dessous du couple de déclenchement du limiteur 40. Le micro-contact incorporé dans ledit limiteur coupe l'alimentation des moteurs 31 et 32 des chariots 25 et 28, et les coordonnées du point $a$ mesurées par les codeurs 34 et 35 des vis 33 et 27 sont enregistrées dans l'automate 45. Le limiteur 40 autorise de nouveau le vissage du goujon 10 par les visseuses 38.

Le vissage se poursuit donc sur deux à trois tours à vitesse lente avec augmentation progressive de la vitesse de vissage et vissage complet du goujon s'il ne se produit pas de nouveau coïncement.

Dans le cas où un second coïncement se produit, le limiteur de couple 40 se déclenche et actionne par l'intermédiaire du micro-contact incorporé et de l'automate 45 une nouvelle mise en marche des chariots 25 et 28 pour une deuxième recherche du point optima de vissage.

Cette deuxième recherche s'effectue à partir du point $a$ (figure 6) correspondant à l'arrêt de la recherche précédente, et à présent, s'il se dégage une direction préférentielle de coïncement selon une spirale d'Archimède aplatie ou rectangulaire comme représentée sur les figures 5c et 5d en fonction de l'option initialement choisie, qui est dans l'exemple décrit une spirale initiale ronde.

Par conséquent, sous l'action des chariots 25 et 28, l'extrémité du goujon 10 décrit à partir du centre $a$ une spirale d'Archimède aplatie B jusqu'à la nouvelle position optima de vissage $b$ (figure 6). Cette position $b$ est également détectée au moment où le couple de vissage redescend en-dessous du couple de déclenchement du limiteur 40. Ce limiteur autorise de nouveau le vissage du goujon 10 par la visseuse 38 et les coordonnées du point $b$ sont enregistrées dans l'automate 45.

Le vissage du goujon 10 s'effectue à vitesse rapide jusqu'au vissage complet du goujon si possible ou jusqu'à un nouveau coïncement.

Dans le cas où un ou plusieurs nouveaux coïncements se produit, a chaque fois la nouvelle recherche de la position optima de vissage s'effectue à partir du centre précédemment enregistré, par une nouvelle spirale aplatie (C D E F) jusqu'à un nouveau centre optima de vissage (c d e) qui est enregistré dans l'automate 45.

La position de recherche optima de vissage se renouvéle donc après chaque coïncement et on suppose qu'il peut se produire plusieurs coïncements pendant un vissage d'un goujon.

Evidemment les centres (a, b, c, ...) des positions optima de vissage peuvent être situées de part et d'autre de l'axe Y ou dans une direction préférentielle de recherche différente et en un point quelconque des différentes spirales.

Par contre, si après la première recherche de la position optima de vissage, il n'y a pas de direction préférentielle, la nouvelle recherche de la position optima de vissage s'effectue également à partir du point a correspondant à l'arrêt de la recherche précédente, mais selon une spirale ronde ou carrée (figures 5a, 5b) en fonction de l'option initialement choisie qui est dans le cas présent une spirale ronde.

Par conséquent, sous l'action des chariots 25 et 28, l'extrémité du goujon 10 décrit à partir du centre a (figure 7) une nouvelle spirale ronde B' jusqu'à la nouvelle position optima de vissage b', et ainsi de suite.

La fin du vissage est détectée par le capteur de position axiale intégré dans le vérin compensateur de poids 37. Ce procédé de vissage est renouvelé pour chaque goujon de la cuve du réacteur.

Pour le dévissage, la remise en position, préenregistrée, du vissage autorise le départ du dévissage. La compensation de poids est maintenant réglée par exemple à 105% du poids du goujon, et le débrayage de la table à mouvements croisés orthogonaux permet de terminer ce dévissage.

On voit que les avantages du procédé et du dispositif suivant l'invention sont de permettre le vissage de goujons en effectuant une recherche cumulée de la position optima de vissage de façon à éviter que des contraintes importantes se produisent sur les pièces en mouvement, et entraînent par frottement une usure irrégulière et prématurée de ces pièces. En outre, le procédé permet également de faciliter les opérations de vissage du couvercle sur la cuve et de diminuer assez sensiblement les temps de vissage, tout en évitant les interventions du personnel pendant ce travail dans une zone de rayonnements radioactifs trop élevés.

Enfin, le procédé et le dispositif suivant l'invention s'appliquent non seulement aux centrales nucléaires comportant un réacteur à eau sous pression, mais à d'autres secteurs de l'industrie nucléaire, aux installations pétrolières et pétrochimiques, aux installations minières, ou encore pour la fermeture de turbines, vannes hydrauliques, conduites sous pression ou corps de vannes. De façon générale, le procédé et le dispositif suivant l'invention s'appliquent dans le cadre de nombreuses installations industrielles mettant en oeuvre des éléments de vissage de grandes dimensions.

## Revendications

1. Procédé de vissage de goujons, notamment pour le fixation du couvercle d'une cuve comportant des orifices taraudés, dans lequel après avoir fixé le goujon (10) à un dispositif de vissage-dévissage (20),
— on vérifie la verticalité du goujon (10) et son alignement avec l'axe de l'orifice taraudé (5),
— on commande la descente du goujon (10) jusqu'à son accostage dans le chambrage du taraudage de l'orifice (5),
— on met en rotation le goujon (10) dans le sens inverse du vissage,
— on détecte le point d'engagement des filets (11) du goujon (10) dans les filets de l'orifice taraudé (5),
— on arrête la rotation du goujon (10) en sens inverse et on commande le début du vissage par la rotation dudit goujon en sens normal sur quelques tours, si possible, et à vitesse lente,
— si on détecte pendant ce vissage un premier coincement du goujon (10) dans l'orifice taraudé (5) lorsque le couple de vissage devient supérieur à un couple de déclenchement déterminé, on arrête la rotation du goujon (10),
— on effectue, dès la détection de ce premier coincement, une première recherche de position optima de vissage du goujon (10) par une trajectoire appropriée, ladite trajectoire de la première recherche de position optima de vissage étant une spirale ronde ou carrée,
— on arrête cette première recherche au moment où le couple de vissage redevient inférieur au couple de déclenchement et on enregistre les coordonnées du nouveau centre optima de vissage,
— on poursuit le vissage à vitesse réduite sur quelques tours et on augmente, si possible, la vitesse de vissage,
— on détecte pendant ce vissage chaque nouveau coincement et on effectue après chaque coincement une nouvelle recherche de position optima de vissage par une trajectoire appropriée à partir du centre correspondant à l'arrêt précédent préalablement enregistré,
la trajectoire des recherches successives des positions optima de vissage étant soit des spirales aplaties ou rectangulaires, s'il y a une direction préférentielle du coincement, soit des spirales rondes ou carrées dans le cas contraire,
— on reprend le vissage après chaque détection du nouveau centre optima de vissage,
— et on poursuit le vissage du goujon (10) à vitesse rapide jusqu'à la détection de la fin du vissage.

2. Dispositif de vissage de goujons (10), notamment pour la fixation d'un couvercle (1) d'une cuve (2) comportant des orifices taraudés (5), ledit dispositif comprenant des moyens (21) d'orientation du goujon (10) selon une trajectoire appropriée, un système de compensation de poids asservi (37) relié auxdits moyens par une liaison articulée (36), un système de vissage (38) réversible et à vitesse variable, un limiteur de couple (40) réglé à un couple de déclenchement correspondant au couple maximum de vissage, un organe de préhension (39) du goujon (10) permettant d'exercer sur ledit goujon un couple d'entraînement dans les deux sens et un effort axial, et un automate programmable (45) de pilotage de l'ensemble du dispositif, caractérisé par le fait que les moyens d'orientation du goujon (10) selon une trajectoire appropriée sont constitués par une table (21) à mouvements croisés orthogonaux dont la mise en marché est commandée par le limiteur de couple (40), un capteur de mesure de position axial étant implanté dans le système de compensation de poids (37).

3. Dispositif selon la revendication 2, caractérisé par le fait que la table (21) comporte un banc fixe (22) supportant un premier chariot (25) entraîné en translation suivant un axe Y par une vis (23) et un écrou entraînement (26), ledit premier chariot supportant un deuxième chariot (28) également entraîné en translation suivant un axe X orthogonal à l'axe Y par une vis (27) et un écrou d'entraînement (30).

4. Dispositif selon la revendication 3, caractérisé par le fait que les vis (23 et 27) des chariots (25 et 28) sont entraînées en rotation par des organes mécaniques ou hydrauliques respectivement (31 et 32), lesdits organes (31, 32) étant pilotés par l'automate programmable (45).

5. Dispositif selon les revendications 3 et 4, caractérisé par le fait que les vis (23 et 27) sont munies chacune d'un codeur incrémental.

**Patentansprüche**

1. Verfahren zur Verschraubung von Bolzen, insbesondere zur Fixierung von Behälterdeckeln, die Öffnungen mit Innengewinden aufweisen, bei dem, nachdem man den Bolzen (10) in einer Schraubvorrichtung (20) befestigt hat,
—man die Vertikalität des Bolzens (10) und seine Ausrichtung mit der Achse der mit einem Innengewinde versehenen Öffnung (5) kontrolliert,
—man das Herablassen des Bolzens (10) bis zum Einfahren in die Einschließung des Innengewindes der Öffnung (5) veranlaßt,
—man den Bolzen (10) in der Richtung entgegengesetzt zur Verschraubungsrichtung in Rotation versetzt,
—man den Punkt des Eingreifens des Gewindes (11) des Bolzens (10) in das Gewinde der mit einem Innengewinde versehenen Öffnung (5) feststellt,
—man die Rotation des Bolzens (10) im entgegengesetzten Sinn anhält und den Beginn der Verschraubung durch Rotation des Bolzens im normalen Sinn durch, wenn möglich, einige Umdrehungen langsamer Geschwindigkeit veranlaßt,
—wenn man die Verklemmung des Bolzens (10) in der mit einem Innengewinde versehenen Öffnung (5) feststellt, indem das Schraubmoment ein festgelegtes Auskopplungsmoment überschreitet, man die Rotation des Bolzens (10) anhält,

—man nach der Feststellung der ersten Verklemmung eine erste Suche der optimalen Position zur Verschraubung des Bolzens (10) längs eines geeigneten Weges veranlaßt, wobei dieser Weg zur ersten Suche der optimalen Schraubposition eine runde oder viereckige Spirale ist,
—man diese erste Suche in dem Moment beendet, in dem das Schraubmoment wieder kleiner wird als das Auskopplungsmoment und man die Koordinaten des neuen optimalen Verschraubungszentrums speichert,
—man die Verschraubung bei reduzierter Geschwindigkeit für einige Umdrehungen fortsetzt und man, wenn möglich, die Geschwindigkeit der Verschraubung erhöht,
—man während der Verschraubung jede neue Verklemmung erkennt, und in dem man nach jeder Verklemmung eine neue Suche der optimalen Verschraubungsposition längs eines geeigneten Weges durchführt, ausgehend von dem entsprechenden Zentrum des vorhergehenden Stops, welches vorher gespeichert wurde, wobei der Weg zur nachfolgenden Suche der optimalen Position zur Veruchraubung entweder eine abgeplattete oder rechteckige Spirale ist, wenn eine Vorzugsrichtung der Verklemmung vorliegt, oder andernfalls eine runde oder quadratische Spirale ist,
—man nach jeder Erkennung des neuen Zentrums optimaler Verschraubung die Verschraubung wieder aufnimmt, und in dem
—man die Verschraubung des Bolzens (10) mit hoher Geschwindigkeit bis zur Erkennung des Endes der Verschraubung fortsetzt.

2. Vorrichtung zur Verschraubung von Bolzen (10), insbesondere zur Fixierung von Deckeln (1) von Behältern (2), welche mit einem Innengewinde (5) versehene Öffnungen aufweisen, wobei die Vorrichtung Mittel (21) zur Ausrichtung des Bolzens (10) längs eines geeigneten Weges aufweist sowie ein Kompensationssystem mit geregelten Gewichten (37), die mit besagten Mitteln durch eine gelenkige Verbindung (36) verbunden sind, ein umkehrbares System veränderlicher Geschwindigkeit zur Verschraubung (38), ein Momenten-Begrenzer (40), der von einem Auskopplungsmoment entsprechend dem maximalen Schraubmoment geregelt wird, ein Greiforgan (39) für den Bolzen (10), der es erlaubt, auf den Zapfen ein Antriebsmoment in beiden Richtungen sowie eine axiale Kraft anzuwenden sowie einen programmierbaren Automaten (45) zur Führung des Aufbaus der Vorrichtung, dadurch gekennzeichnet,
daß die Mittel zur Führung des Zapfens (10) längs eines geeigneten Weges durch einen orthogonalen Kreuztisch (21) gebildet werden, dessen Bewegungsbeginn von dem Momenten-Begrenzer (40) veranlaßt wird, wobei ein Aufnehmer zur Messung der axialen Position in dem Kompensationssystem der Gewichte (37) implementiert ist.

3. Vorrichtung nach Anspruch 2, dadurch gekennzeichnet, daß der Tisch (21) eine feste Bank (22) aufweist, die einen ersten Schlitten (25) trägt, der zur Bewegung längs einer Achse Y durch eine Schraube (32) sowie eine Antriebsmutter (26) bewegt wird, wobei der erste Schlitten einen zweiten Schlitten (28) trägt, der ebenso zur Bewegung längs einer Achse X rechtwinklig zur Achse Y durch eine Schraube (27) sowie eine Antriebsmutter (30) bewegt wird.

4. Vorrichtung nach Anspruch 3, dadurch gekennzeichnet, daß die Schrauben (23 und 27) der Schlitten (25 und 28) jeweils durch mechanische oder hydraulische Organe (31 und 32) angetrieben sind, wobei die Organe (31, 32) von dem programmierbaren Automaten (45) gesteuert werden.

5. Vorrichtung nach Anspruch 3 und 4, dadurch gekennzeichnet, daß die Schrauben (23 und 27) mit einem inkrementierenden Codierer versehen sind.

## Claims

1. Method of screwing in bolts, especially for fastening the cover of a container having tapped orifices, characterised in that, after the bolt (10) has been fastened to a screwing/unscrewing device (20),

—a check is made to ascertain that the bolt (10) is vertical and is aligned with the axis of the tapped orifice (5),

—the bolt (10) is lowered under control, until it engages in the tapping recess of the orifice (5),

—the bolt (10) is rotated in the opposite direction to the direction of screwing in,

—the point of engagement of the threads (11) of the bolt (10) in the threads of the tapped orifice (5) is detected,

—the rotation of the bolt (19) in the opposite direction is stopped, and screwing in is started under control by rotating the said bolt in the normal direction by a few turns, if possible, and at a low speed,

—if, during this screwing in, a first jamming of the bolt (10) in the tapped orifice (5) is detected as the screwing in torque becomes greater than a specific disengaging torque, the rotation of the bolt (10) is stopped,

—when this first jamming is detected, a first search is made along a suitable path for the optimum screwing in position for the bolt (10), this path for the first search for the optimum screwing in position being a round or square spiral,

—this first search is stopped at the moment when the screwing in torque becomes less than the disengaging torque again, and the coordinates of the new optimum screwing in centre are recorded,

—screwing in is continued at a reduced speed for a few turns, and if possible the screwing in speed is increased,

—during this screwing in, each new jamming is detected, and after each jamming a new search for the optimum screwing in position is carried out along a suitable path from the centre corresponding to the preceding previously recorded stop, the paths of the successive searches for the optimum screwing in positions being either flattened or rectangular spirals if there is a preferential direction of jamming, or round or square spirals otherwise,

—screwing in is resumed after each detection of the new optimum screwing in centre,

—and the screwing in of the bolt (10) is continued at high speed, until the end of screwing in is detected.

2. Device for screwing in bolts (10), especially for fastening a cover (1) to a container (2) having tapped orifices (5), said device comprising means (21) for directing the bolt (10) along a suitable path, a servo-controlled weight-compensating system (37) connected to the said means by articulated connection (36), a reversible and variable-speed screwing system (38), a torque limiter (40) set at a disengaging torque corresponding to the maximum screwing in torque, a member (39) for gripping the bolt (10), making it possible to exert a driving torque on said bolt in both directions as well as an axial force,

—and a programmable auto-control unit (45) for controlling the device as a whole, characterised in that the means (21) for directing the bolt (10) along a suitable path comprise a table (21) executing perpendicularly intersecting movements, the operation of which is controlled by the torque limiter (40), an axial position-measuring sensor being incorporated in the weight compensating system (37).

3. Device according to claim 2, characterised in that the table (21) comprises a fixed bench (22) supporting a first carriage (25), driven in translation along axis Y by means of a screw (23) and a driving nut (26), said first carriage supporting a second carriage (28), also driven in translation along an axis X at right angles to the axis Y by means of a screw (27) and a driving nut (30).

4. Device according to claim 3, characterised in that the screws (23 and 27) of the carriages (25 and 28) are driven in rotation by mechanical or hydraulic members (31 and 32) respectively, the said members (31, 32) being controlled by the programmable auto-control unit (45).

5. Device according to claims 3 and 4, characterised in that the screws (23 and 27) are each provided with an incremental coder.

FIG.1

FIG.2

## FIG.3

## FIG.4

## FIG.5

FIG.5a

FIG.5c

FIG.5b

FIG.5d

FIG.7

FIG.6